# EUROPEAN PATENT SPECIFICATION

(11) **EP 2 109 522 B1**
(45) Date of publication and mention of the grant of the patent: **11.11.2015**
(21) Application number: 08710969.0
(22) Date of filing: 04.02.2008
(51) Int. Cl.: B29C 31/06, B29C 31/04

(54) **RESIN MATERIAL MEASURING METHOD AND RESIN MATERIAL MEASURING APPARATUS**
HARZMATERIAL-MESSVORRICHTUNG UND HARZMATERIAL-MESSVERFAHREN
MÉTHODE ET APPAREIL DE MESURE D'UNE RÉSINE

(30) Priority: 05.02.2007 JP 2007025545
(43) Date of publication of application: 21.10.2009
(73) Proprietor: FUJIFILM Corporation, Tokyo 106-0031 (JP)
(72) Inventor: EIHA, Noriko, Odawara-shi, Kanagawa (JP); ITO, Hidekane, Odawara-shi, Kanagawa (JP); WATANABE, Seiichi, Odawara-shi, Kanagawa (JP)
(74) Representative: Hoffmann Eitle
(86) International application number: PCT/JP2008/052090
(87) International publication number: WO 2008/096836

(56) References cited:
- FR-A- 2 856 007
- JP-A- 4 320 807
- US-A- 3 375 553
- US-A- 5 344 299

## Description

### Technical Field

The present invention relates to a resin material measuring method and a resin material measuring apparatus for obtaining a prescribed amount of resin material by measuring liquid resin material.

### Background Art

For cost reduction, size reduction, etc., plastic lenses are in many cases used as small imaging lenses of cell phones etc. In general, plastic components of this kind are manufactured by using an injection molding apparatus. However, where a small component such as a lens is produced by injection molding, dies include resin charging portions other than a cavity for producing a product, such as a runner. Therefore, the capacity of the resin charging portions is large relative to the volume of the product. As a result, waste material accounts for a large proportion of resin material used, that is, a large part of a resin material is rendered useless. Molding methods are known which can prevent waste material from being produced in manufacture. In one method, a resin preform having the same weight as a product (a component to be manufactured) is formed in advance and a product is manufactured by compressing the preform using dies. According to this method, only resin having the same weight as the final product is injected into the dies and hence no waste material is produced.

To produce such a preform for compression molding, it is necessary to accurately measure out resin having the same weight as a product. For example, JP-A-7-280633 is known as disclosing a conventional technique relating to such a measuring method.

JP-A-7-280633 discloses a technique for measuring pellet-shaped oil or fat. More specifically, material (oil or fat) that is stored in a tank having a narrow bottom portion is pushed downward in the tank by an agitation screw and a length of rod-shaped material that hangs down from an ejection hole that is located at the bottom of the tank is measured by an optical sensor that is located under the tank. The length of the hanging-down material is converted into a weight by using a computer (CPU) or the like. A state that material having a prescribed weight can be obtained is thus recognized. Material having a prescribed length is cut away by a cutter that is disposed close to the ejection hole.

However, where the technique of JP-A-7-280633 is employed, material cannot necessarily be measure with high accuracy. More specifically, rod-shaped material that hangs down from the ejection hole that is located at the bottom of the tank is deformed by its own weight and is varied in temperature and pressure when discharged from the tank. Therefore, the corresponding relationship between the length of a hanging-down portion of the material and the weight of that portion varies in a complicated manner. Therefore, even if various correction calculations are performed in converting a detected length to a weight using a computer, it is difficult in practice to obtain a highly accurate measurement result.

On the other hand, in manufacturing small imaging lenses of cell phones etc., measurement accuracy of about 0.1 mg is currently required in the preform weight measurement. Development of a more accurate measuring method has thus been desired.

JP-A-04 320 807 discloses a method of supplying materials in a rubber material apparatus capable of pushing out the mass of a correct weight rubber material. US 3, 375, 553 discloses an apparatus for supplying plasticized material into a mold cavity where it may be formed into an article. US 5, 344, 299 discloses a resin material supply apparatus and method for a resin press molding machine in which resin material is extruded in a supply cylinder toward a die by a piston, and the molded resin material is cut by a cutter which slides along a front end surface of the die.

### Disclosure of the Invention

An object of the present invention is to provide a resin material measuring method and a resin material measuring apparatus capable of highly accurate measurement and being also applicable to small components.

The above object of the invention is attained by the following apparatus and methods:
(1) A resin material measuring method which obtains a prescribed amount of a resin material by measuring liquid resin material, the resin material measuring method including: charging the resin material having a fluidity into an internal space of a cylinder using a cylinder-piston mechanism which includes: the cylinder having a discharge aperture at one end and the internal space being constant in cross-sectional area; and a piston which is inserted in the internal space of the cylinder; determining a necessary movement stroke length of the piston corresponding to the resin material of a prescribed volume according to a relationship between the volume of the resin material and the cross-sectional area of the internal space of the cylinder and the movement stroke length of the piston; discharging the resin material from the cylinder through the discharge aperture by moving the piston by the determined movement stroke length; and cutting the discharged resin material from the resin material located inside the cylinder.
   , wherein the piston is moved in the vertical direction, and the resin material is discharged upward from the discharge aperture of the cylinder.
   According to this resin material measuring method, the volume of resin that is discharged from the discharge aperture of the cylinder is recognized accurately on the basis of the piston stroke length and the cross-sectional area of the internal space of the cylinder. More specifically, an actual amount of resin that is discharged from the discharge aperture is equal to the capacity of a portion of the cylinder that corresponds to the piston movement distance (stroke length) by which the resin is pushed out from the internal space of the cylinder. Since the cross-sectional area of the internal space of the cylinder is constant, the volume of discharged resin can be recognized easily and accurately as a value that is proportional to the piston movement distance. As a result, the amount of resin discharged from the discharge aperture, that is, the amount (intended to satisfy a target amount) of cut-away resin, coincides with a prescribed, constant amount with high accuracy.
(2) The resin material measuring method as described in the item (1), wherein the resin material in the discharging is a thermoplastic polymer, and is discharged in a state that it is heated to a temperature that is higher than a glass transition point thereof.
   According to this resin material measuring method, since resin that is heated to a temperature that is higher than its glass transition point is taken out, there does not occur an event that resin is set at a halfway position in the channel to clog the channel or leave resin immobile. Resin is allowed to flow smoothly, which serves to shorten the time necessary for a compression molding process. Furthermore, deterioration in characteristics due to repeated melting and solidification of resin can be prevented.
(3) The resin material measuring method as described in the item (1) or (2), further comprising: detecting a pressure of the resin material in the cylinder, wherein the cutting of the discharged resin material is performed in a case where the detected pressure returns from a high pressure at the time of discharge of the resin material to a low pressure after an end of the discharge.

In this resin material measuring method, a pressure that is actually acting on resin that is located close to the discharge aperture is detected and resin is cut by a cutting mechanism when the pressure has returned to a prescribed pressure. Therefore, the amount of cut-away resin (i.e., a preform) can always be kept constant without being influenced by such factors as the viscosity of the resin material and the friction between resin and the inner wall of the cylinder.

In general, when resin is discharged from the cylinder through the discharge aperture by means of the piston, pressure acts on the resin because of the pressing by the piston and resin is discharged from the discharge aperture in a compressed state. Therefore, immediately after a stop of the movement of the piston, the discharge of resin of the prescribed amount from the discharge aperture may not have completed yet. This problem can be solved by cutting resin after its pressure has lowered and it has recovered from compression.

According to this resin material measuring method, since resin is discharged upward from the discharge aperture, influences on the measurement accuracy can be reduced such as density variation of resin due to gravity. For example, as disclosed in JP-A-7-280633, where material is discharged downward, the thickness or shape of the discharged material is varied due to gravity acting on it or a density variation may occur due to tension acting on material to be discharged. In the case of downward discharge, discharged resin assumes a rod shape to make handling difficult. In contrast, where resin is discharged upward from the discharge aperture, the discharged resin stays around the discharge aperture because of its own weight. Therefore, almost no variation occurs in the force that acts on the resin in the cylinder because of the weight of the discharged resin. This enables more accurate measurement. Furthermore, in the case of upward discharge, discharged resin is more apt to round. As a result, the cut-away resin is enhanced in ease of handling and hence can be compressed easily in the next step of, for example, compressing it.
(5) The resin material measuring method as described in any one of the items (1) to (4), further comprising: supplying the resin material to the cylinder every time the resin material is discharged by moving the piston and the discharged resin material is cut.

According to this resin material measuring method, since resin is supplied to the cylinder every time resin has been discharged, the measurement can be performed stably and the measurement accuracy is increased.
(6) The resin material measuring method as described in any one of the items (1) to (4), further comprising: supplying the resin material to the cylinder in a case where the discharging of the resin material by moving the piston and the cutting of the discharged resin are performed two times or more.

According to this resin material measuring method, since resin is supplied to the cylinder collectively whenever resin has been measured and discharged plural times. Therefore, resin of an amount corresponding to plural discharges can be stored in the cylinder and hence the resin measurement cycle can be shortened.
(7) The resin material measuring method as described in any one of the items (1) to (6), wherein the cut resin is a preform for forming a plastic lens.

This resin material measuring method is directed to a case of taking out a preform for formation of a plastic lens. The volume and weight of a preform are very small and light and hence high measurement accuracy is required. And it is important to reduce waste material. This resin material measuring method can provide a specification capable of satisfying these requirements.
(8) A resin material measuring apparatus which obtains a prescribed amount of a resin material by measuring liquid resin material, the resin material measuring apparatus comprising: a cylinder that has a discharge aperture at one end and an internal space being constant in cross-sectional area; a piston that is inserted in the internal space of the cylinder; a resin charging unit that charges the resin material having a fluidity into the internal space of the cylinder; a control section that determines a necessary movement stroke length of the piston corresponding to the resin material of a prescribed volume according to a relationship between the volume of the resin material and the cross-sectional area of the internal space of the cylinder and the movement stroke length of the piston, and that discharges the resin material from the cylinder through the discharge aperture by moving the piston by the determined movement stroke length; and a resin cutting unit that cuts the discharged resin material from resin located inside the cylinder
   , wherein the piston is movable in the vertical direction, and the resin material is dischargeable upward from the discharge aperture of the cylinder.

According to this resin material measuring apparatus, the volume of resin that is discharged from the discharge aperture is recognized on the basis of the piston stroke length and the horizontal cross-sectional area of the internal space of the cylinder. More specifically, an actual amount of resin that is discharged from the discharge aperture is equal to the capacity a portion of the cylinder that corresponds to the piston movement distance (stroke length) by which the resin is pushed out from the internal space of the cylinder. Since the horizontal cross-sectional area of the internal space of the cylinder is constant, actually the amount of discharged resin can be recognized easily as a value that is proportional to the piston movement distance. As a result, high-precision measurement is realized.
(9) The resin material measuring apparatus as described in the item (8), further comprising: a heating unit that heats the resin material in the cylinder to a temperature that is higher than a glass transition point thereof.

According to this resin material measuring apparatus, since resin that is heated to a temperature that is higher than its glass transition point is taken out, there does not occur an event that resin is set at a halfway position in the channel to clog the channel or leave resin immobile. Resin is allowed to flow smoothly, which serves to shorten the time necessary for a compression molding process. Furthermore, deterioration in characteristics due to repeated melting and solidification of resin can be prevented.
(10) The resin material measuring apparatus as described in the item (8) or (9), further comprising: a pressure sensor that detects a pressure of the resin material in the cylinder, wherein the resin cutting unit cuts the discharged resin material in a case where the pressure detected by the pressure sensor returns from a high pressure at the time of discharge of the resin to a low pressure after an end of the discharge.

In this resin material measuring apparatus, a pressure that is actually acting on resin that is located close to the discharge aperture is detected and resin is cut by a cutting mechanism when the pressure has returned to a prescribed pressure. Therefore, there does not occur an event that resin is cut in a compressed state (i.e., the resin has not recovered from compression). The amount of cut-away resin can always be kept constant without being influenced by such factors as the viscosity of the resin material and the friction between resin and the inner wall of the cylinder.
(11) The resin material measuring apparatus as described in any one of the items (8) to (10), wherein the cylinder has an inner diameter of 0.5 to 5mm.

According to this resin material measuring apparatus, since the cylinder has a small inner diameter, the discharge amount is less prone to vary due to, for example, a resin density variation in the cylinder. More accurate measurement is thus enabled.

According to the invention, the amount of extracted resin is determined accurately on the basis of the piston stroke length in the cylinder and the cross-sectional area of the internal space of the cylinder, which enables high-precision resin measurement. Even where resin expands or contrasts in the cylinder, the amount of extracted resin (i.e., the amount of cut-away resin) can be set with high accuracy by detecting a pressure of resin that is located close to the discharge aperture.

### Brief Description of the Drawings

The invention disclosed herein will be understood better with reference to the following drawings of which:
Fig. 1 is a front view showing an exemplary configuration of a preform measuring apparatus for compression molding;
Fig. 2 is a flowchart showing a specific control operation for producing a preform using the preform measuring apparatus for compression molding shown in Fig. 1;
Figs. 3A to 3D are sectional views showing states of the preform measuring apparatus for compression molding at respective stages in the flowchart of Fig. 2;
Fig. 4 is a graph showing how the pressure of resin that is detected by a pressure sensor varies with time;
Figs. 5A to 5C illustrate a specific operation that is performed in cutting resin;
Fig. 6 is a graph showing a relationship between the installation position of the pressure sensor and the measurement accuracy;
Fig. 7 is a flowchart showing a modified control operation for producing a perform;
Figs. 8A and 8B show the structures of modified cutters that are used in the apparatus of Fig. 1; Fig. 9A shows an example using heat insulators and Fig. 9B shows a lens-shutter-type cutter;
Fig. 9 illustrates a modification in which resin is cut by ashing by illumination with laser light;
Fig. 10A and 10B illustrate a cutting method in which resin is pulled off by moving a plate-like member horizontally; and
Figs. 11A to 11C illustrate operation states of a compression molding process.

### Best Mode for Carrying Out the Invention

A resin material measuring method and a resin material measuring apparatus according to a preferred embodiment of the present invention will be hereinafter described in detail with reference to the drawings.

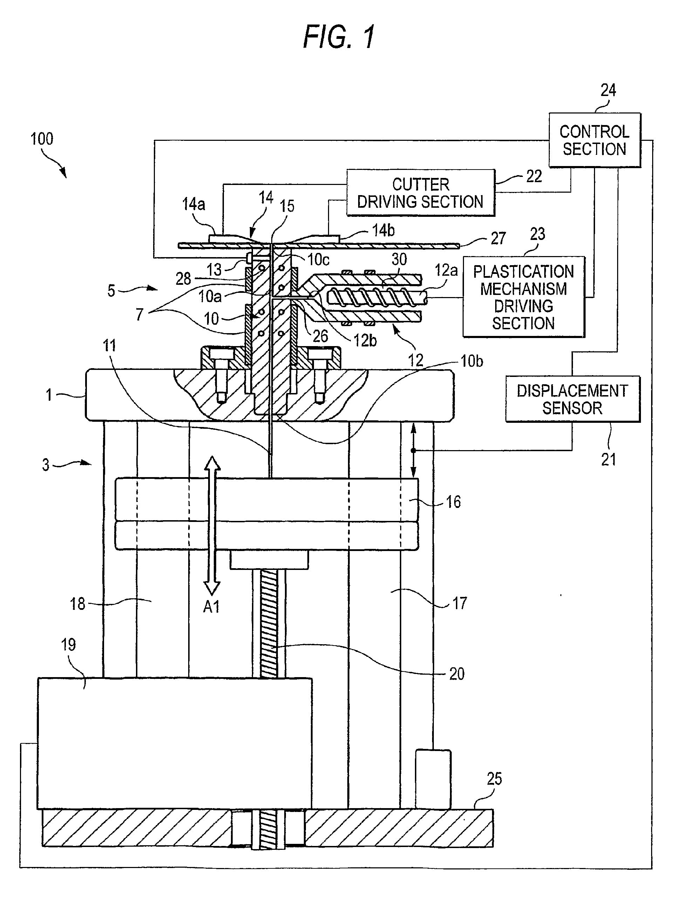

Fig. 1 is a front view showing an exemplary configuration of a preform measuring apparatus for compression molding.

The preform measuring apparatus 100 for compression molding is partially the same in configuration as a preplasticating injection molding machine and is equipped with a resin material measuring apparatus according to the invention. This embodiment will be described for a particular case of forming a preform for compression molding (i.e., a resin lump of a prescribed amount). This embodiment assumes manufacture of an imaging plastic lens to be used in, for example, cell phones with a camera. This plastic lens is so small as to measure, for example, about 2 mm in diameter, and the preform measuring apparatus 100 for compression molding shown in Fig. 1 is configured so as to be suitable for production of a preform made of a very small amount of material.

First, the configuration of the preform measuring apparatus 100 for compression molding according to the embodiment will be described. A piston elevation mechanism 3 is placed on an apparatus frame 25. A resin discharge mechanism 5 in which a piston 11 is inserted vertically and which serves to discharge a prescribed amount of resin upward is placed on the piston elevation mechanism 3. A cylinder 10 of the resin discharge mechanism 5 is fixed on a supporting plate 1 so that the cylinder 10 is positioned in a direction perpendicular to a surface of the supporting plate 1, and has a through-hole 10a that is formed so as to extend vertically (i.e., parallel with the direction of arrow A1 in Fig. 1) from a bottom end 10b to a top end 10c. The through-hole 10a defines a long and narrow internal space. The through-hole (internal space) 10a has a circular horizontal cross section whose diameter and area are uniform over the entire length of the through-hole 10a. It is desirable that the diameter of the horizontal cross section of the through-hole 10a be smaller than or equal to 10 mm; in practice, it is preferable that the diameter is in an approximate range of 0.5 to 5 mm. Although more accurate measurement is enabled as the diameter of the horizontal cross section of the through-hole 10a decreases, if it is too small the discharge volume per one action becomes too small and the measurement time becomes unduly long. Furthermore, if the diameter of the horizontal cross section of the through-hole 10a is too small, the following problems are raised. That is, the cylinder 10 becomes so long that the working for producing itself is made difficult. And the resin pressure becomes too high at the time of discharge, which may cause buckling of the piston 11 or result in a phenomenon that it takes long time for the resin pressure to lower after a discharge.

Part of the piston 11 is inserted into the through-hole 10a of the cylinder 10 through the bottom end 10b. Like the through-hole 10a, the piston 11 has a long and narrow shape having a circular horizontal cross section. The diameter and the cross-sectional area of the through-hole 10a are approximately the same as those of the piston 11, whereby the piston 11 can slide vertically in the through-hole 10a of the cylinder 10. The stroke length of the piston 11 should be longer than or equal to 1 mm because the shape accuracy of resin products is 0.2% to 0.5% (preferably about ±0.1%) and the position accuracy of the piston 11 is about 1 µm in the case where the accuracy of a servo motor is taken into consideration.

The base portion of the piston 11 is fixed to a support plate 16 of the piston elevation mechanism 3, and the piston 11 can slide in the cylinder 10 as the support plate 16 is elevated or lowered. The piston elevation mechanism 3 is provided with guides 17 and 18 that extend in the vertical direction (i.e., in the direction of arrow A1), and the support plate 16 is formed with guide holes that are fitted with the respective guides 17 and 18. The piston 11 is elevated or lowered as the support plate 16 is elevated or lowered in the state that the guides 17 and 18 are inserted in the guide holes. To prevent the support plate 16 from being inclined or deviated, ball bearings or the like are inserted between the support plate 16 and the guides 17 and 18.

The piston elevation mechanism 3 is also provided, on the apparatus frame 25, with a linear actuator for moving the support frame 16 and the piston 11 in the direction of arrow A1. More specifically, an electric motor 19 as a drive source is fixed to the apparatus frame 25 and a gear (not shown) is coupled with the drive shaft of the electric motor 19. A ball screw 20 which is fixed to the support plate 16 is threadedly engaged with the gear. Therefore, when the electric motor 19 is driven, the gear which is coupled with the electric motor 19 is rotated, whereby the ball screw 20 is moved and the support plate 16 which is coupled with the ball screw 20 is elevated or lowered in the direction of arrow A1. The electric motor 19 is a servo motor, a stepping motor, or the like.

A displacement sensor 21 is disposed in the vicinity of the support plate 16 to detect positional information relating to a movement of the piston 11 in the stroke direction (i.e., a movement of the support plate 16 in the direction of arrow A1). The displacement sensor 21 detects the relative positional relationship, in the direction of arrow A1, between the support plate 16 and a top plate (as viewed in Fig. 1) of the apparatus frame 25.

On the other hand, a plastication mechanism 12 as a resin charging unit is coupled with a portion of the outer circumferential surface of the cylinder 10. The plastication mechanism 12 pushes resin material (product material) forward (i.e., in the discharge direction) while agitating it with a screw 12a. The plastication mechanism 12 thus produces liquid resin 30 that has been rendered flowable by melting resin material by heating it and giving resin-to-resin frictional heat to it and discharges liquid resin into the through-hole 10a of the cylinder 10. Resin is discharged into the through-hole 10a via a channel 12b which communicates with the internal space of the plastication mechanism 12 and the through-hole 10a of the cylinder 10. A check valve 26 for preventing a reverse flow of the resin 30 is disposed at a halfway position of the channel 12b. The screw 12a is driven by a plastication mechanism driving section 23.

A heater 28 is buried in the cylinder 10, and serves to heat resin 30 that has been injected into the through-hole 10a of the cylinder 10 so that the temperature of the resin 30 is kept higher than its glass transition point. Heat insulators 7 are provided on the outer circumferential surface of the cylinder 10 at proper positions. Although not shown in Fig. 1, a portion, close to the cylinder 10, of the apparatus frame 25 is provided with a heater and the apparatus frame 25 is cooled by a coolant or the like on the side, distant from the cylinder 10, of the heater.

The cylinder 10 is formed with a hole that communicates with the through-hole 10a and is located close to a discharge aperture 15 between the top end 10c of the cylinder 10 and the merging point of the through-hole 10a and the channel 12b of the plastication mechanism 12. A pressure sensor 13 is inserted in the hole. The pressure sensor 13 detects the pressure that acts on resin 30 that is located close to the discharge aperture 15.

A cutter 14 as a resin cutting unit for cutting away discharged resin is disposed around the discharge aperture 15. In the exemplary configuration of Fig. 1, the cutter 14 consists of a pair of blades 14a and 14b that are disposed on the left and on the right of the discharge aperture 15. The blades 14a and 14b are driven by a cutter driving section 22. When driven by the cutter driving section 22, the blades 14a and 14b are moved in such directions as to come close to or go away from each other. Resin 30 that is discharged form the discharge aperture 15 is cut as the blades 14a and 14b are reciprocated. Although in the exemplary configuration of Fig. 1 the cutter 14 is placed on a plate 27, it may be disposed anywhere as long as it can cut discharged resin 30. The cutter 14 is heated to a temperature that is a little higher than the glass transition point Tg of the resin material (about Tg + 50°C), for the following reasons. If the temperature of the cutter 14 were room temperature, resin would start to solidify from portions that are in contact with the blades 14a and 14b and resin fragments would be scattered when the resin is cut. Conversely, if the temperature of the cutter 14 were too high, resin would stick to the blades 14a and 14b of the cutter 14.

A control section 24 controls the operation of the individual sections of the apparatus 100 shown in Fig. 1. More specifically, at least the pressure sensor 13, the cutter driving section 22, the plastication mechanism driving section 23, the displacement sensor 21, and the electric motor 19 are connected to the control section 24. The control section 24 may be dedicated control circuits incorporating a microprocessor etc., a general-purpose programmable controller, or a personal computer.

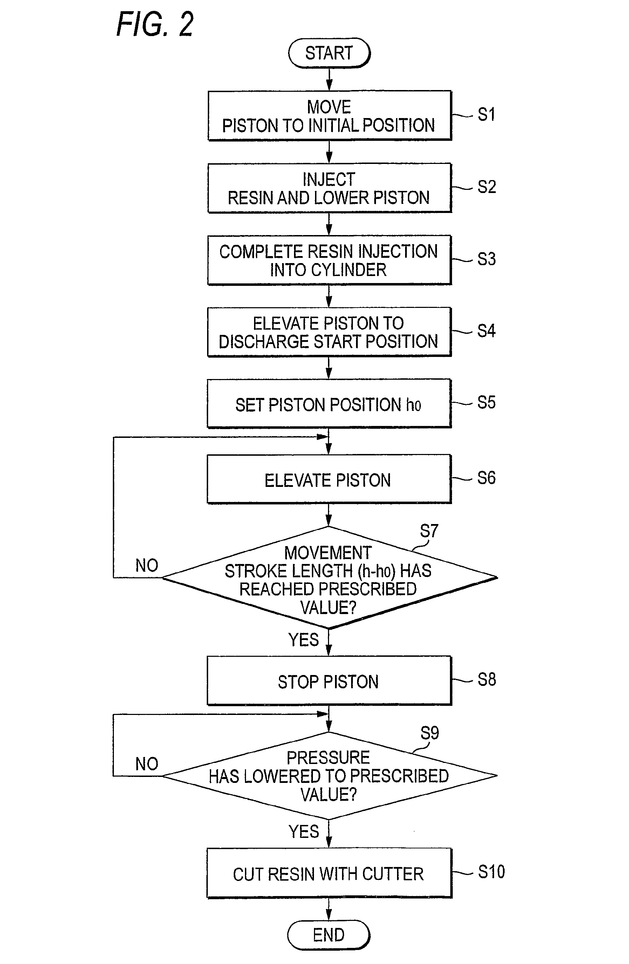

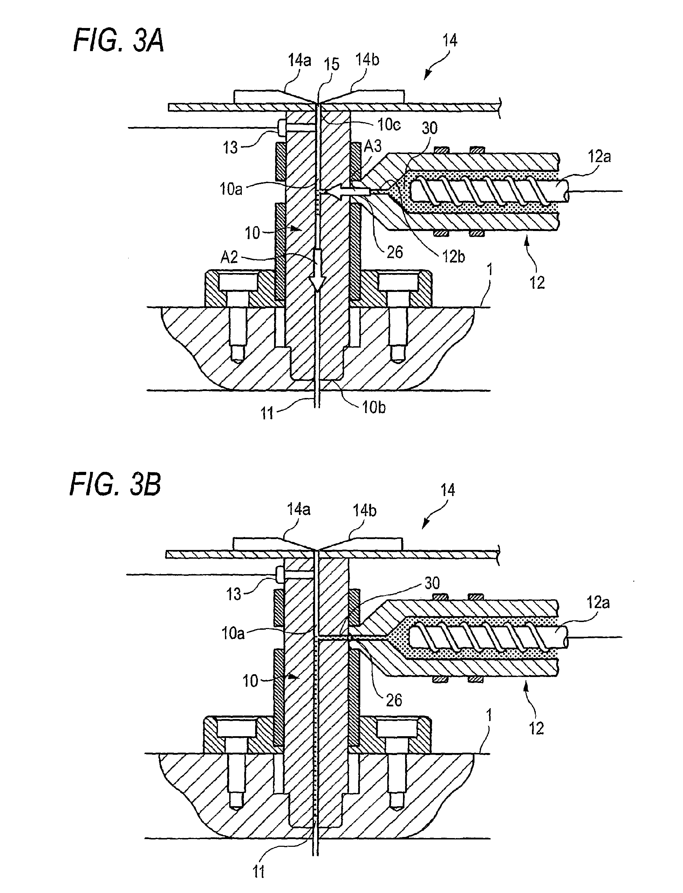

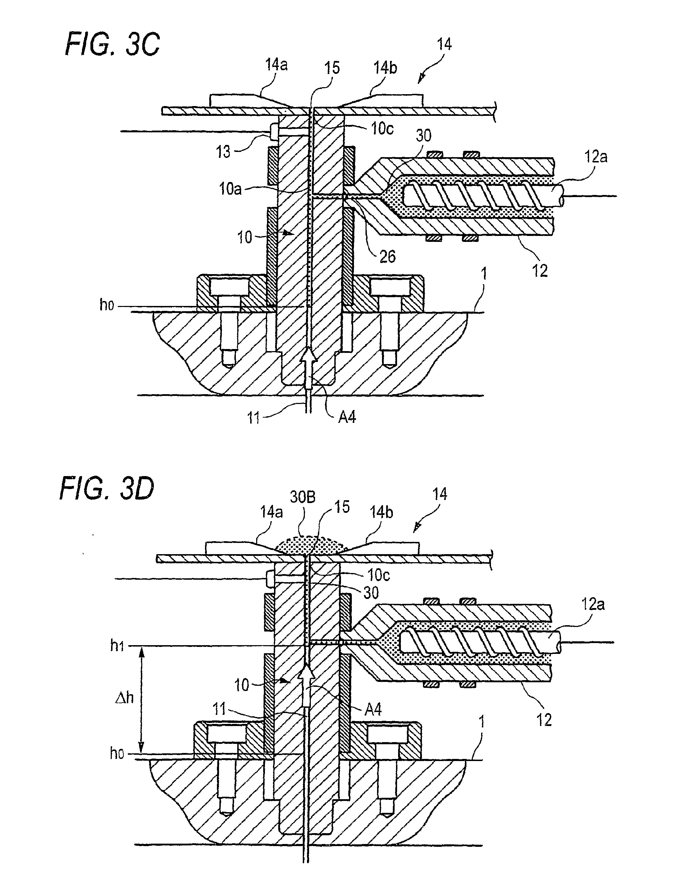

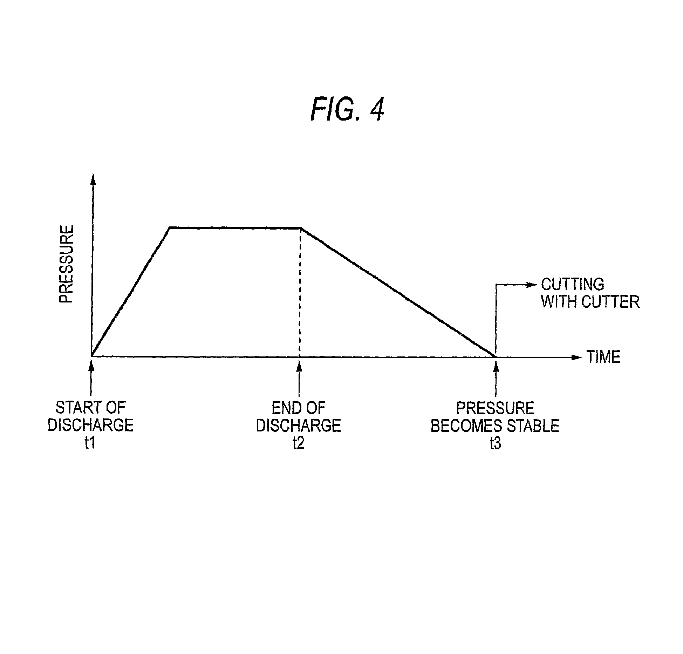

Fig. 2 is a flowchart showing a specific control operation for producing a preform using the preform measuring apparatus 100 for compression molding shown in Fig. 1. Figs. 3 and 4 show states of the preform measuring apparatus 100 for compression molding at respective stages in the flowchart of Fig. 2. The individual steps shown in Fig. 2 are realized by control of the control section 24. The details of the process for producing a preform will be described below.

At step S1, the piston 11 is positioned at a prescribed position of an initial state by moving the support plate 16 in the vertical direction by driving the electric motor 19 while referring to positional information that is detected by the displacement sensor 21.

At step S2, the plastication mechanism 12 is driven, whereby resin 30 that has been rendered flowable by heating is pushed out of the internal space of the plastication mechanism 12 in the direction of arrow A3 and injected into the through-hole 10a of the cylinder 10 via the channel 12b (see Fig. 3A). At the same time, to inject resin 30 of a necessary volume, the piston 11 is lowered by a prescribed distance in the direction indicated by arrow A2 by driving the electric moor 19 while referring to positional information that is detected by the displacement sensor 21. As a result of this operation, flowable resin 30 is charged into an empty space (i.e., a space that is not occupied by the piston 11) of the through-hole 10a of the cylinder 10 (see Fig. 3B). When resin 30 is injected in the above manner, it is preferable that the discharge aperture 15 be closed by the cutter 14.

Step S3 is a step for completing the injection of resin 30. That is, as shown in Fig. 3B, it is confirmed that the empty space of the through-hole 10a of the cylinder 10 has been filled with flowable resin 30 and the pushing-out of resin 30 from the plastication mechanism 12 and the movement of the piston 11 are stopped. Since the check valve 26 is closed thereafter, no resin 30 flows back to the plastication mechanism 12.

At step S4, the electric motor 19 is driven, whereby the piston 11 is moved in the direction of arrow A4 and the resin 30 that is injected in the through-hole 10a of the cylinder 10 is pushed up by the piston 11 (see Fig. 3C). The movement of the piston 11 is suspended when the top end of the resin 30 that is injected in the through-hole 10a has reached a discharge state position, that is, the position of the discharge aperture 15. At this time, the cutter 14 is rendered in an open state. Alternatively, the top surface of the resin 30 may be shaped properly by causing a small portion of the resin 30 to project from the discharge aperture 15 and cutting away that portion. This makes it possible to control the resin volume with higher accuracy.

At step S5, to store a reference position where the piston 11 is located before discharge of resin 30 from the cylinder 10, information indicating the position (height) where the piston 11 is located when step S4 has completed is received from the displacement sensor 21 and stored as a piston position h₀.

At step S6, the piston 11 is elevated again in the direction of arrow A4 by driving the electric motor 19. As a result, as shown in Fig. 3D, the resin 30 that is injected in the through-hole 10a of the cylinder 10 is pushed up by the piston 11 and discharged gradually from the discharge aperture 15.

The resin 30 that is discharged from the discharge aperture 15 has been heated in advance inside the cylinder 10 by the heater 28 (heating unit) to a temperature that is higher than its glass transition point.

At step S7, a current piston position h is recognized by sequentially receiving information indicating a current position (height) of the piston 11 from the displacement sensor 21. Amovement stroke length Δh (= h - h₀) of the piston 11 with respect to the reference position h₀ is detected. Whether or not a prescribed movement stroke has been reached is judged by comparing the detected movement stroke length Δh with a predetermined threshold value (corresponding to a predetermined preform volume). If the detected movement stroke length Δh is smaller than the threshold value, the process returns to step S6 to continue the elevation of the piston 11. If the detected movement stroke length Δh has reached the threshold value, the process moves to the next step S8.

At step S8, the movement of the piston 11 is stopped by stopping the driving of the electric motor 19. Resin 30 that has been discharged from the discharge aperture 15 by steps S6 and S7 remains above the discharge aperture 15 and is gradually piled up around the discharge aperture 15. Resin 30B is thus piled up as shown in Fig. 3D.

At step S9, to determine the timing of execution of a cutting control, the pressure acting on the resin 30 is detected repeatedly by the pressure sensor 13 while the detected pressure is compared with a predetermined threshold value (approximately equal to ordinary pressure). If it is recognized that the detected pressure has lowered to the predetermined value, the process moves to the next step S10.

At step S10, the cutter 14 is driven by the cutter driving section 22 and the resin 30 is cut, whereby the resin 30B that is piled up above the discharge aperture 15 is separated from the resin 30 inside the cylinder 10. The separated resin 30B will be used as a preform 30C for compression molding.

Incidentally, the pressure of resin 30 that is detected by the pressure sensor 13 varies as shown in Fig. 4, for example. That is, steps S6 onward are started at time t1 in Fig. 4, whereby resin 30 is discharged from the discharge aperture 15. As the piston 11 is moved upward, the pressure of the resin 30 being pressed by the piston 11 is increased gradually and then becomes stable at a certain large value. In this state, resin 30 is discharged from the discharge aperture 15.

The movement of the piston 11 is stopped when it has been moved by the prescribed stroke length. After time t2 when the discharge of resin 30 has completed, the pressure acting on the resin 30 is released gradually and the detected pressure decreases with time.

When the pressure state of the resin 30 is rendered stable after the stop of movement of the piston 11, the pressure acting on the resin 30 is returned to ordinary pressure and hence the detected pressure is lower than or equal to the prescribed value. At time t3 when the pressure has been rendered stable after the decrease, the cutter 14 is driven and piled-up resin 30B is cut away.

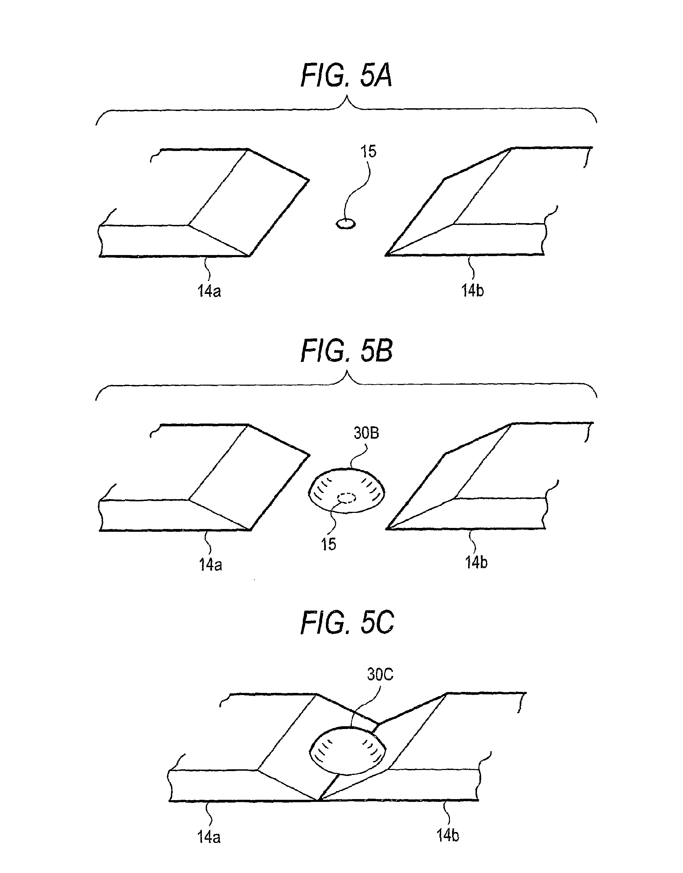

Figs. 5A to 5C show a specific operation that is performed in cutting away resin 30B.

Before resin 30 is discharged from the discharge aperture 15, no resin 30 exists around the discharge aperture 15 (see Fig. 5A). When resin 30 is discharged from the discharge aperture 15 by the control of steps S6 onward shown in Fig. 2, resin 30B is piled up above the discharge aperture 15 (see Fig. 5B). When the cutter 14 is driven at step S10, the resin 30B assumes a lump whose temperature is higher than its glass transition point Tg. The blades 14a and 14b are moved horizontally from the left side and the right side, respectively, approach the discharge aperture 15, and are inserted under the resin 30B until contacting each other. The resin 30B is thus cut away.

Since as described above the resin 30B is cut away by driving the cutter 14 with such timing that the pressure of the resin 30 has lowered, the measurement accuracy of an extracted preform is made high. If high pressure is acting on resin 30 that is located close to the discharge aperture 15, the resin 30 is contracted by the compressing force and its density is varied. Therefore, the relationship between the movement stroke length of the piston 11 and the discharge amount (weight) of resin 30 is not kept constant. In contrast, where resin 30 is cut after the pressure acting on the resin 30 has been released sufficiently by the control of Fig. 2, a proportional relationship is maintained between the weight of an extracted preform 30C and the movement stroke length of the piston 11. That is, the weight of an extracted preform 30C can be controlled with high accuracy so as to be proportional to the movement stroke length of the piston 11. Actually, if the density and the temperature of resin 30 is kept constant, a proportional relationship is established between the capacity that is the product of the horizontal cross-sectional area of the internal space of the through-hole 10a and the movement stroke length of the piston 11 and the weight of a preform 30C. The horizontal cross-sectional area of the internal space of the through-hole 10a can be regarded as a constant.

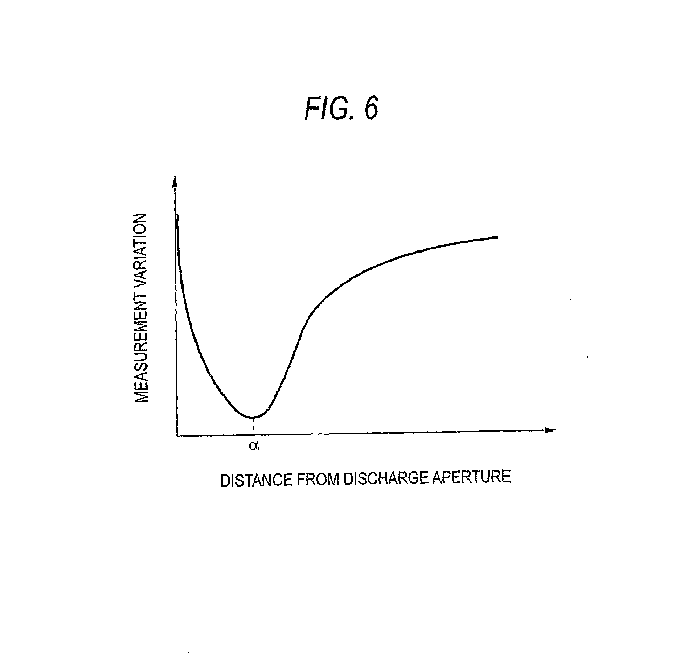

The installation position of the pressure sensor 13 is important in terms of the measurement accuracy. That is, it is known that the installation position of the pressure sensor 13 has significant influence on the measurement accuracy. Fig. 6 is a graph showing a relationship between the installation position of the pressure sensor 13 and the measurement variation.

In the graph of Fig. 6, the horizontal axis represents the distance, from the discharge aperture 15, of the pressure sensor 13 which is disposed on the side of the top end 10c of the through-hole 10a of the cylinder 10 and the vertical axis represents the measurement variation that occurs at each position. With the characteristic shown in Fig. 6, it is appropriate to install the pressure sensor 13 at a position corresponding to a distance α that provides a minimum measurement variation.

The above-described example is directed to the measurement operation that is performed for the first time after setting of the apparatus 100. In the second and following measurement operations, steps S1 and S4 need not be executed because the space of the through-hole 10a from the tip of the piston 11 to the discharge aperture 15 is filled with melted resin 30. It is preferable that as shown in Fig. 3D the movement range of the piston 11 not include the path from the merging point of the through-hole 10a and the channel 12b (extending from the plastication mechanism 12) to the discharge aperture 15. Moving the piston 15 under the merging point (i.e., on the opposite side to the discharge aperture 15) prevents a resin non-charged space from occurring between the discharge aperture 15 and the merging point and thereby allows resin 30 to be always supplied continuously with an accurate flow rate control.

Various modifications and improvements can be made of the configuration and operation of the above-described apparatus 100. Several modifications will be described below.

In the above-described process, resin 30 is supplied to the cylinder 10 every time resin 30 has been discharged by moving the piston 11. Another process is possible in which resin 30 is supplied to the cylinder 10 once whenever resin 30 has been discharged two times or more by moving the piston 11.

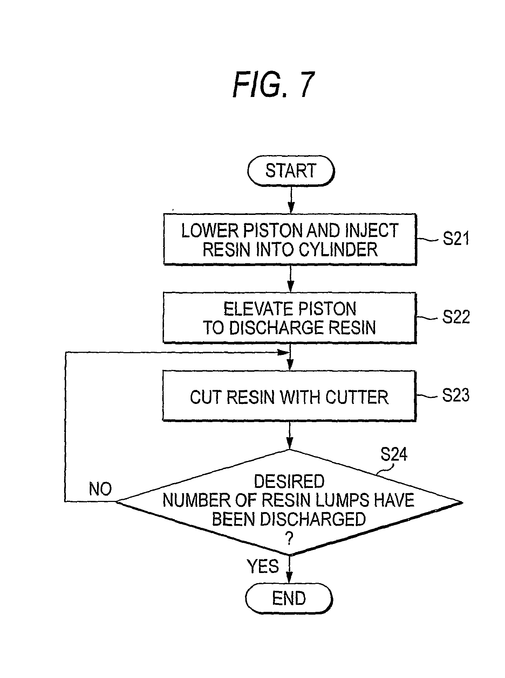

Fig. 7 shows this process. The configuration of the apparatus as a control subject of the process of Fig. 7 is the same as shown in Fig. 1.

At step S21, the piston 11 is lowered in the cylinder 10 by driving the electric motor 19 and resin 30 is injected into the through-hole 10a of the cylinder 10 from the plastication mechanism 12.

At step S22, the piston 11 is elevated in the cylinder 10 by driving the electric motor 19. The piston 11 is moved by such a stroke length that a desired amount of resin 30 is discharged. As a result, part of the resin 30 that is injected in the through-hole 10a is measured and discharged from the discharge aperture 15 by the elevation stroke of the piston 11.

At step S23, discharged resin 30B is cut away by the cutter 14, whereby one preform 30C is produced.

At step S24, it is judged whether or not the number of discharged resin lumps has reached a desired number. The maximum number of preforms 30C that can be produced by one injection of resin 30 into the cylinder 10 is determined by the volume of the resin 30 injected into the through-hole 10a of the cylinder 10 and the volume of a single preform 30C. Steps S22 and S23 are performed repeatedly until preforms 30C made of the resin material 30 are produced in the desired number.

According to this method, resin 30 is supplied to the cylinder 10 collectively whenever resin 30 has been measured and discharged plural times. Therefore, resin 30 of an amount corresponding to plural discharges can be stored in the cylinder 30 and hence the resin discharge cycle can be shortened. The piston 11 is moved only in one direction while resin 30 is discharged plural times, and resin 30 can be discharged successively without lowering the measurement accuracy.

As in steps S8 onward shown in Fig. 2, a preform 30C may be extracted by cutting away discharged resin 30B by driving the cutter 14 after the pressure has been released. In this case, accurate amounts of preforms 30C can be obtained easily.

Next, modifications of the cutter 14 shown in Fig. 1 will be described.

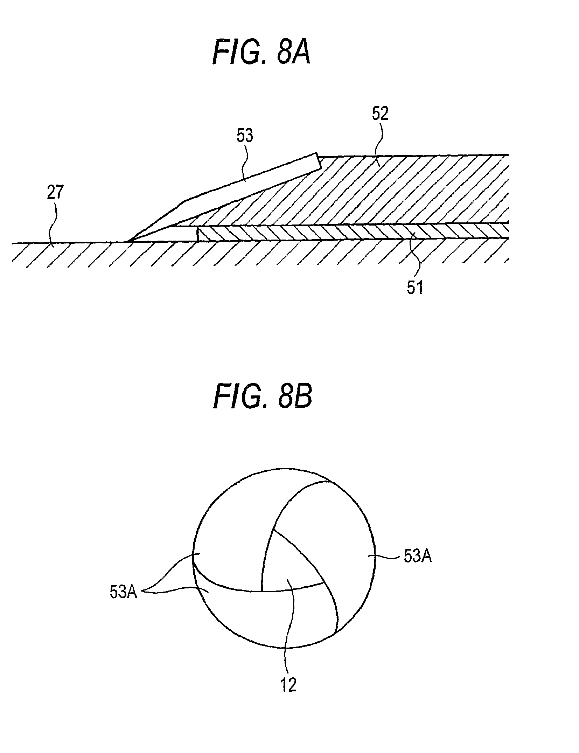

Figs. 8A and 8B show the structures of modified cutters that are used in the apparatus 100 of Fig. 1. In the modification of Fig. 8A, a cutter is constructed by support plates 52 and blades 53 that are fixed to the respective support plates 52. Each support plate 52 is placed on the plate 27 with a thin-plate-shaped heat insulator 51 interposed in between. With this structure, temperature increase of the blades 53 can be prevented even if the temperature of the plate 27 is increased. Whereas the temperature of the cylinder 10 becomes higher than or equal to the glass transition point Tg of the resin material 30 plus 50°C, the temperature of the blades 53 can be kept relatively low (in a range of Tg to Tg + 50°C), whereby resin 30 can be cut reliably.

In the modification of Fig. 8B, plural (in the illustrated example, three) blades 53A are provided movably so as to be able to close the discharge aperture 15, whereby what is called a lens-shutter-type cutter is formed. With the thus-configured cutter, resin 30 is cut away in such a manner that its last-cut portion assumes a point shape; that is, a beautiful cutting surface is obtained.

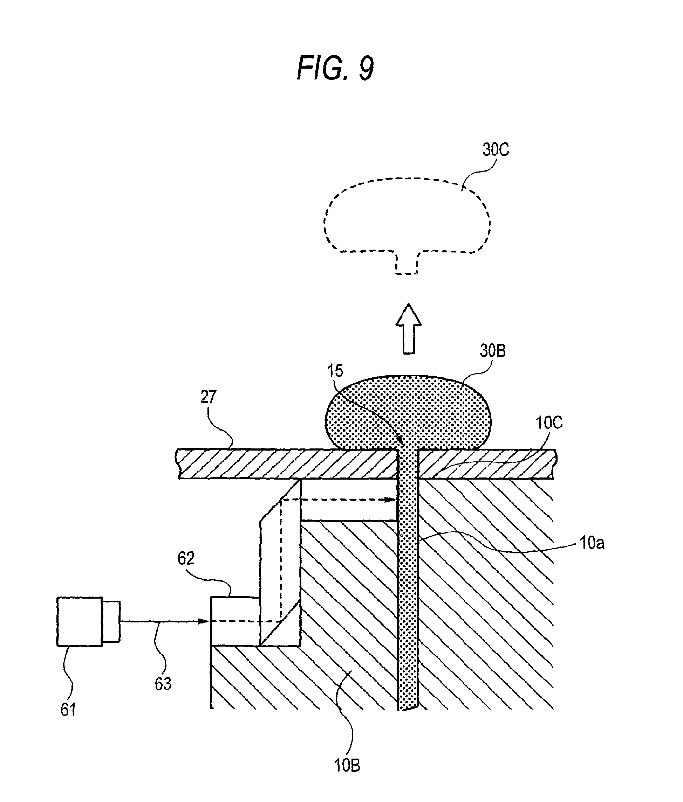

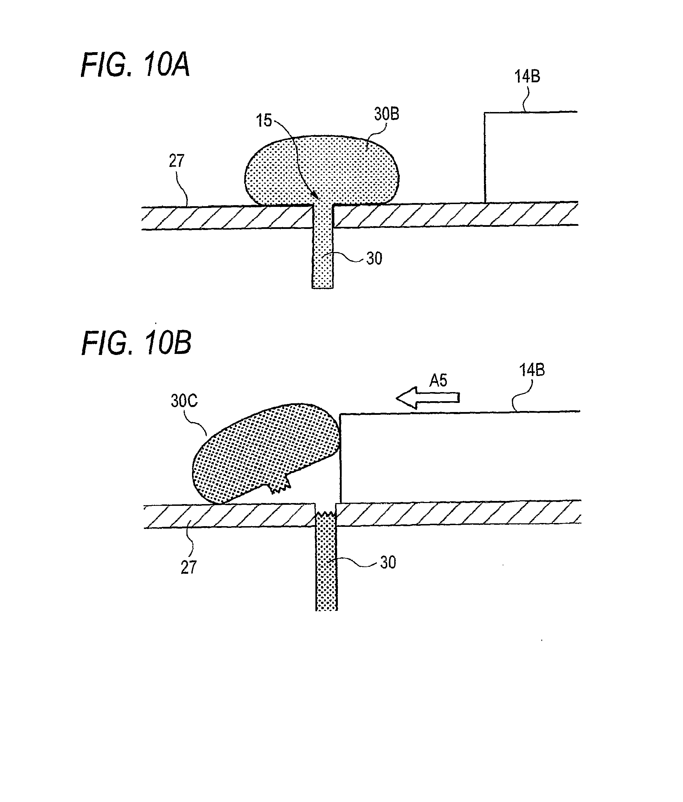

In a modification shown in Fig. 9, resin 30 is cut by ashing by illumination with laser light 63 instead of using the blades 14a and 14b of the cutter 14. More specifically, in an apparatus shown in Fig. 10, a laser light source (laser oscillator) 61 is disposed in the vicinity of the discharge aperture 15 of a cylinder 10B. Laser light 63 emitted from the laser light source 61 is guided by a prism 62 to resin 30 that is close to the top end 10c of the through hole 10a. The laser light source 61 may be a proper laser such as a high-output-power semiconductor laser, a YAG laser, or a CO₂ laser.

In a modification shown in Figs. 10A and 10B, instead of the blades 14a and 14b, a relatively thick plate-like member 14B is provided so as to be movable in the horizontal direction. More specifically, the plate-like member 14B is moved horizontally in the direction of arrow A5, whereby resin 30B that is piled up above the discharge aperture 15 is pulled off at the discharge aperture 15 by the side face (tip face) of the plate-like member 14B and a preform 30C is extracted. With this example, a preform 30C can be extracted reliably though the structure of the mechanism is simple.

Preforms 30C that are measured and extracted one by one by the preform measuring apparatus 100 for compression molding according to the above-described embodiment are sent to the next process (compression molding process) being gripped by a handling mechanism (not shown) and worked properly into products. Where preforms 30C are transported with their temperature kept higher than its glass transition point Tg (lower than about Tg + 30°C), the heating time in the next process can be shortened.

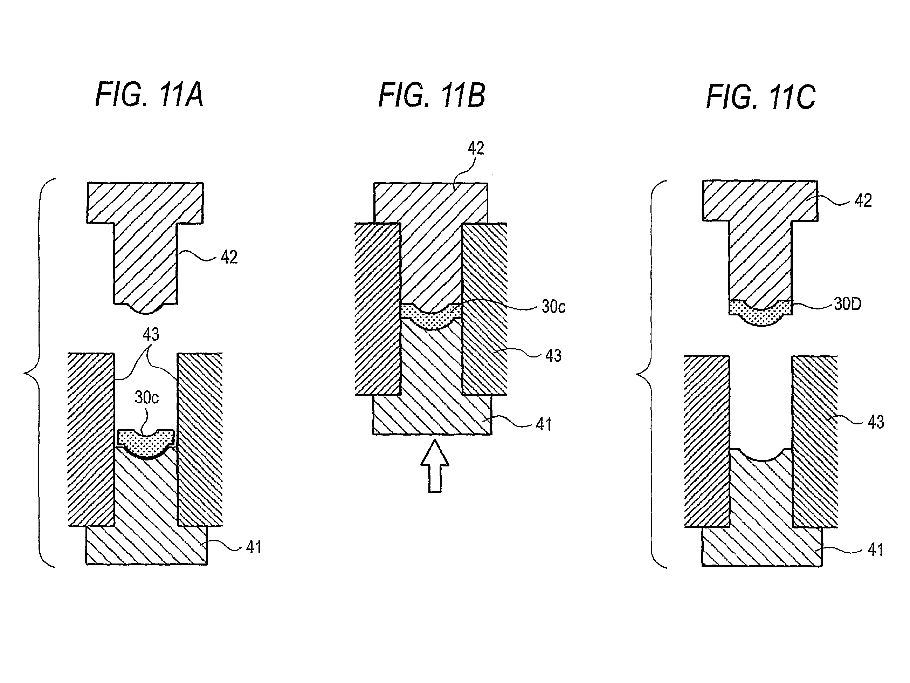

Figs. 11A to 11C show an exemplary operation that is performed in the compression molding process. In this example, a preform 30C is compression-molded by using three dies 41-43.

As shown in Fig. 11A, first, in a state that the die 42 is separated from the dies 41 and 43, one preform 30C that has been extracted from the apparatus 100 of Fig. 1 is put on the die 41 that is inserted in the die 43 and the preform 30C is heated. Then, as shown in Fig. 11, the dies 41 and 43 are moved toward the die 42, whereby the preform 30C is pressed between the dies 41 and 42 inside the die 43 and thereby shaped into a product shape. After the preform 30C has been cooled in the pressed state, the dies 41 and 42 are separated from each other and a compression-molded preform (product 30D) is taken out. The product 30D (e.g., a plastic lens) having a desired shape is thus completed. The die temperature at the time of input of a preform 30C may be either higher than or lower than its glass transition point Tg. However, die temperature being higher than the glass transition point Tg is preferable because the heating time of the preform 30C is shortened. A preform 30C contracts as it cools. Therefore, the die shape can be transferred with higher accuracy by pressing a preform 30C as it cools. Furthermore, where the temperature of a preform 30C is much higher than the glass transition point Tg, the die temperature may be kept constant at about Tg.

In the above-described embodiment, the volume of resin 30 to be discharged from the discharge aperture 15 is recognized on the basis of the stroke length of the piston 11 and the horizontal cross-sectional area of the internal space of the cylinder 10. Resin 30 having the predetermined volume is discharged upward from the discharge aperture 15 by moving the piston 11, and cut away by the cutter 14 which is disposed close to the discharge aperture 15. Discharged resin 30B of the prescribed amount is thus taken out. In this manner, a preform 30C for compression molding that has been measured with high accuracy can be obtained.

The above-described resin material measuring method can be modified as appropriate. For example, an empty space over the piston 11 can be filled with resin 30 by injecting resin 30 into the cylinder 10 with the piston 11 kept still or moving the piston 11 upward after injection of resin 30 (at the start of a first shot).

### Industrial applicability

As described above, in the preform measuring method and apparatus for compression molding according to the invention, the volume or weight of resin to be discharged from the discharge aperture is recognized on the basis of the stroke length of the piston and the cross-sectional area of the internal space of the cylinder. Therefore, even if resin that is discharged from the discharge aperture expands, contrasts, or changes in shape, it does not influence the amount of resin that is taken out as a preform (i.e., the amount of resin that is separated by cutting). High-precision measurement is thus enabled. Since resin is discharged upward from the discharge aperture, a phenomenon can be prevented that the resin density is varied being influenced by gravity and a measurement error is caused.

Therefore, even in the case of manufacturing a very small or light component such as an imaging plastic lens for, for example, a cell phone with a camera, the invention makes it possible to control the volume or weight of a preform to a design value. The amount of waste material can thus be reduced greatly.

The present application claims foreign priority based on Japanese Patent Application (JP 2007-025545) filed February 5 of 2007.

## Claims

1. A resin material measuring method which obtains a prescribed amount of a resin material by measuring liquid resin material (30), the resin material measuring method comprising:
charging the resin material having a fluidity into an internal space (10a) of a cylinder using a cylinder-piston mechanism which includes: the cylinder (10) having a discharge aperture (15) at one end and the internal space being constant in cross-sectional area; and a piston (11) which is inserted in the internal space (10a) of the cylinder;
determining a necessary movement stroke length of the piston corresponding to the resin material of a prescribed volume according to a relationship between the volume of the resin material and the cross-sectional area of the internal space of the cylinder (10) and the movement stroke length of the piston;
discharging the resin material from the cylinder through the discharge aperture (15) by moving the piston by the determined movement stroke length; and
cutting the discharged resin material from the resin material located inside the cylinder, **characterized in that**
the piston (11) is moved in the vertical direction, and
the resin material is discharged upward from the discharge aperture (15) of the cylinder.

2. The resin material measuring method as claimed in claim 1, wherein
the resin material in the discharging is a thermoplastic polymer, and is discharged in a state that it is heated to a temperature that is higher than a glass transition point thereof.

3. The resin material measuring method as claimed in claim 1 or 2, further comprising:
detecting a pressure of the resin material in the cylinder, wherein
the cutting of the discharged resin material is performed in a case where the detected pressure returns from a high pressure at the time of discharge of the resin material to a low pressure after an end of the discharge.

4. The resin material measuring method as claimed in any one of claims 1 to 3 further comprising:
supplying the resin material to the cylinder every time the resin material is discharged by moving the piston and the discharged resin material is cut.

5. The resin material measuring method as claimed in any one of claims 1 to 3, further comprising:
supplying the resin material to the cylinder in a case where the discharging of the resin material by moving the piston and the cutting of the discharged resin are performed two times or more.

6. The resin material measuring method as claimed in any one of claims 1 to 5, wherein the cut resin is a preform for forming a plastic lens.

7. A resin material measuring apparatus which obtains a prescribed amount of a resin material by measuring liquid resin material (30), the resin material measuring apparatus comprising:
a cylinder (10) that has a discharge aperture (15) at one end and an internal space (10a) being constant in cross-sectional area;
a piston (11) that is inserted in the internal space of the cylinder;
a resin charging unit (12) that charges the resin material having a fluidity into the internal space of the cylinder;
a control section (24) that determines a necessary movement stroke length of the piston corresponding to the resin material of a prescribed volume according to a relationship between the volume of the resin material and the cross-sectional area of the internal space of the cylinder (10) and the movement stroke length of the piston, and that discharges the resin material from the cylinder through the discharge aperture by moving the piston by the determined movement stroke length; and
a resin cutting unit (14) that cuts the discharged resin material from resin located inside the cylinder, **characterized in that**
the piston (11) is movable in the vertical direction, and
the resin material is dischargeable upward from the discharge aperture (15) of the cylinder.

8. The resin material measuring apparatus as claimed in claim 7, further comprising:
a heating unit (28) that heats the resin material in the cylinder to a temperature that is higher than a glass transition point thereof.

9. The resin material measuring apparatus as claimed in claim 7 or 8, further comprising:
a pressure sensor (13) that detects a pressure of the resin material in the cylinder,
wherein the resin cutting unit is a resin cutting unit that cuts the discharged resin material in a case where the pressure detected by the pressure sensor returns from a high pressure at the time of discharge of the resin to a low pressure after an end of the discharge.

10. The resin material measuring apparatus as claimed in any one of claims 7 to 9, wherein the cylinder has an inner diameter of 0.5 to 5mm.

## Patentansprüche

1. Harzmaterial-Messverfahren, welches eine vorgeschriebene Menge eines Harzmaterials durch Messen von flüssigem Harzmaterial (30) erhält, wobei das Harzmaterial-Messverfahren umfasst:
Eingeben des eine Fließfähigkeit aufweisenden Harzmaterials in einen Innenraum (10a) eines Zylinders unter Verwendung eines Zylinder-Kolben-Mechanismus welcher aufweist: den Zylinder (10), der eine Auslassöffnung (15) an einem Ende und den Innenraum aufweist, welcher von konstanter Querschnittsfläche ist; und einen Kolben (11) welcher in den Innenraum (10a) des Zylinders eingeführt ist;
Bestimmen einer erforderlichen Bewegungshub-Länge des Kolbens, die dem Harzmaterial eines vorgeschriebenen Volumens entspricht, gemäß einer Beziehung zwischen dem Volumen des Harzmaterials und der Querschnittsfläche des Innenraums des Zylinders (10) und der Bewegungshub-Länge des Kolbens;
Ausgeben des Harzmaterials aus dem Zylinder durch die Auslassöffnung (15) durch Bewegen des Kolbens um die bestimmte Bewegungshub-Länge; und
Abschneiden des ausgegebenen Harzmaterials von dem in dem Zylinder befindlichen Harzmaterial, **dadurch gekennzeichnet, dass**
der Kolben (11) in der Vertikalrichtung bewegt wird, und
das Harzmaterial nach oben aus der Auslassöffnung (15) des Zylinders ausgegeben wird.

2. Harzmaterial-Messverfahren nach Anspruch 1, wobei
das Harzmaterial beim Ausgeben ein thermoplastisches Polymer ist und in einem derartigen Zustand ausgegeben wird, dass es auf eine Temperatur erwärmt ist, die höher als ein Glasübergangspunkt davon ist.

3. Harzmaterial-Messverfahren nach Anspruch 1 oder 2, ferner mit:
Erfassen eines Drucks des Harzmaterials in dem Zylinder, wobei
das Abschneiden des ausgegebenen Harzmaterials in einem Fall ausgeführt wird, bei dem der erfasste Druck von einem hohen Drucks beim Ausgeben des Harzmaterials zu einem niedrigen Druck nach einem Ende des Ausgebens zurückkehrt.

4. Harzmaterial-Messverfahren nach einem der Ansprüche 1 bis 3, ferner mit:
Zuführen des Harzmaterials zum Zylinder jedes Mal, wenn das Harzmaterial durch Bewegen des Kolbens ausgegeben und das ausgegebene Harzmaterial abgeschnitten wird.

5. Harzmaterial-Messverfahren nach einem der Ansprüche 1 bis 3, ferner mit:
Zuführen des Harzmaterials zum Zylinder in einem Fall, bei dem das Ausgeben des Harzmaterials durch Bewegen des Kolbens und das Abschneiden des ausgegebenen Harzes zwei Mal oder öfter ausgeführt werden.

6. Harzmaterial-Messverfahren nach einem der Ansprüche 1 bis 5, wobei das abgeschnittene Harz eine Vorform zur Ausbildung einer Kunststofflinse ist.

7. Harzmaterial-Messvorrichtung, welche eine vorgeschriebene Menge eines Harzmaterials durch Messen von flüssigem Harzmaterial (30) erhält, wobei die Harzmaterial-Messvorrichtung aufweist:
einen Zylinder (10), der eine Auslassöffnung (15) an einem Ende und einen Innenraum (10a) von konstanter Querschnittsfläche aufweist;
einen Kolben (11), der in den Innenraum des Zylinders eingeführt ist;
eine Harz-Eingabeeinheit (12), die das eine Fließfähigkeit aufweisende Harzmaterial in den Innenraum des Zylinders eingibt;
einen Steuerungsabschnitt (24), der eine erforderliche Bewegungshub-Länge des Kolbens, die dem Harzmaterial eines vorgeschriebenen Volumens entspricht, gemäß einer Beziehung zwischen dem Volumen des Harzmaterials und der Querschnittsfläche des Innenraums des Zylinders (10) und der Bewegungshub-Länge des Kolbens bestimmt, und das Harzmaterial aus dem Zylinder durch die Auslassöffnung durch Bewegen des Kolbens um die bestimmte Bewegungshub-Länge ausgibt; und
eine Harz-Abschneideeinheit (14), die das ausgegebene Harzmaterial von dem in dem Zylinder befindlichen Harz abschneidet, **dadurch gekennzeichnet, dass**
der Kolben (11) in der Vertikalrichtung bewegbar ist, und
das Harzmaterial nach oben aus der Auslassöffnung (15) des Zylinders auszugeben ist.

8. Harzmaterial-Messvorrichtung nach Anspruch 7, ferner mit:
einer Heizeinheit (28), die das Harzmaterial in dem Zylinder auf eine Temperatur erwärmt, die höher als ein Glasübergangspunkt davon ist.

9. Harzmaterial-Messvorrichtung nach Anspruch 7 oder 8, ferner mit:
einem Drucksensor (13), der einen Druck des Harzmaterials in dem Zylinder erfasst,
wobei die Harz-Abschneideeinheit eine Harz-Abschneideeinheit ist, die das ausgegebene Harzmaterial in einem Fall abschneidet, bei dem der durch den Drucksensor erfasste Druck von einem hohen Druck beim Ausgeben des Harzes zu einem niedrigen Druck nach einem Ende des Ausgebens zurückkehrt.

10. Harzmaterial-Messvorrichtung nach einem der Ansprüche 7 bis 9, wobei der Zylinder einen Innendurchmesser von 0.5mm bis 5mm aufweist.

## Revendications

1. Procédé de mesure de matériau de résine qui permet d'obtenir une quantité prescrite d'un matériau de résine par la mesure de matériau de résine liquide (30), le procédé de mesure de matériau de résine comprenant le fait :
de charger le matériau de résine ayant une fluidité dans un espace interne (10a) d'un cylindre en utilisant un mécanisme cylindre-piston qui comporte : le cylindre (10) ayant une ouverture de décharge (15) au niveau d'une extrémité et l'espace interne ayant une aire en coupe transversale constante ; et un piston (11) qui est inséré dans l'espace interne (10a) du cylindre ;
de déterminer une longueur de course de déplacement nécessaire du piston correspondant au matériau de résine d'un volume prescrit selon une relation entre le volume du matériau de résine et l'aire en coupe transversale de l'espace interne du cylindre (10) et la longueur de course de déplacement du piston ;
de décharger le matériau de résine du cylindre à travers l'ouverture de décharge (15) en déplaçant le piston de la longueur de course de déplacement déterminée ; et
de découper le matériau de résine déchargé du matériau de résine situé à l'intérieur du cylindre, **caractérisé en ce que**
le piston (11) est déplacé dans la direction verticale, et
le matériau de résine est déchargé vers le haut à partir de l'ouverture de décharge (15) du cylindre.

2. Procédé de mesure de matériau de résine tel que revendiqué dans la revendication 1, dans lequel le matériau de résine lors de la décharge est un polymère thermoplastique, et est déchargé dans un état où il est chauffé à une température qui est supérieure à un point de transition vitreuse de celui-ci.

3. Procédé de mesure de matériau de résine tel que revendiqué dans la revendication 1 ou 2, comprenant en outre le fait :
de détecter une pression du matériau de résine dans le cylindre, où
la découpe du matériau de résine déchargé est effectuée dans un cas où la pression détectée passe d'une haute pression au moment de la décharge du matériau de résine à une basse pression après la fin de la décharge.

4. Procédé de mesure de matériau de résine tel que revendiqué dans l'une quelconque des revendications 1 à 3, comprenant en outre le fait :
d'alimenter le cylindre en matériau de résine à chaque fois que le matériau de résine est déchargé en déplaçant le piston et le matériau de résine déchargé est découpé.

5. Procédé de mesure de matériau de résine tel que revendiqué dans l'une quelconque des revendications 1 à 3, comprenant en outre le fait :
d'alimenter le cylindre en matériau de résine dans un cas où la décharge du matériau de résine en déplaçant le piston et la découpe de la résine déchargée sont effectuées deux fois ou plus.

6. Procédé de mesure de matériau de résine tel que revendiqué dans l'une quelconque des revendications 1 à 5, dans lequel la résine de découpe est une préforme pour former une lentille en plastique.

7. Appareil de mesure de matériau de résine qui permet d'obtenir une quantité prescrite d'un matériau de résine par la mesure de matériau de résine liquide (30), l'appareil de mesure de matériau de résine comprenant :
un cylindre (10) qui a une ouverture de décharge (15) au niveau d'une extrémité et un espace interne (10a) ayant une aire en coupe transversale constante ;
un piston (11) qui est inséré dans l'espace interne du cylindre ;
une unité de chargement de résine (12) qui charge le matériau de résine ayant une fluidité dans l'espace interne du cylindre ;
une section de commande (24) qui détermine une longueur de course de déplacement nécessaire du piston correspondant au matériau de résine d'un volume prescrit selon une relation entre le volume du matériau de résine et l'aire en coupe transversale de l'espace interne du cylindre (10) et la longueur de course de déplacement du piston, et qui décharge le matériau de résine du cylindre à travers l'ouverture de décharge en déplaçant le piston de la longueur de course de déplacement déterminée ; et
une unité de découpe de résine (14) qui découpe le matériau de résine déchargé de la résine située à l'intérieur du cylindre, **caractérisé en ce que**
le piston (11) est mobile dans la direction verticale, et
le matériau de résine peut être déchargé vers le haut à partir de l'ouverture de décharge (15) du cylindre.

8. Appareil de mesure de matériau de résine tel que revendiqué dans la revendication 7, comprenant en outre :
une unité de chauffage (28) qui chauffe le matériau de résine dans le cylindre jusqu'à une température qui est supérieure à un point de transition vitreuse de celui-ci.

9. Appareil de mesure de matériau de résine tel que revendiqué dans la revendication 7 ou 8, comprenant en outre :
un capteur de pression (13) qui détecte une pression du matériau de résine dans le cylindre,
dans lequel l'unité de découpe de résine est une unité de découpe de résine qui découpe le matériau de résine déchargé dans un cas où la pression détectée par le capteur de pression passe d'une haute pression au moment de la décharge de la résine à une basse pression après la fin de la décharge.

10. Appareil de mesure de matériau de résine tel que revendiqué dans l'une quelconque des revendications 7 à 9, dans lequel le cylindre a un diamètre interne allant de 0,5 à 5 mm.
